# EUROPEAN PATENT APPLICATION

(11) **EP 4 440 173 A1**
(43) Date of publication of application: **02.10.2024**
(21) Application number: 23164993.0
(22) Date of filing: 29.03.2023
(51) Int. Cl.: H04W 16/10, H04W 72/0446, H04W 72/0453, H04L 5/00, H04W 88/08

(54) **A SYSTEM OF NODES FOR A CELLULAR TDD NETWORK**

(71) Applicant: KONTRON TRANSPORTATION FRANCE SAS, 78066 St Quentin Yvelines Cedex (FR)
(72) Inventor: PISON, Laurent, 78760 Jouars Pontchartrain (FR); ASTE, Thierry, 91440 Bures sur Yvette (FR); GRUET, Christophe, 78180 Montigny le Bretonneux (FR)
(74) Representative: Weiser & Voith Patentanwälte Partnerschaft

(57) **Abstract**

In a system (1) of a first and a second node (2ᵢ, 2ᵢ₊₁) for a cellular network operating in Time Division Duplex, TDD, mode the first node (2ᵢ) is configured to wirelessly communicate (8, 9) with user equipments (3ₖ) according to a first pattern (Pᵢ) of time slots (ST) each having a communication mode of either uplink (U) or downlink (D) or mixed (S), and the second node (2ᵢ₊₁) is configured to wirelessly communicate (8, 9) with user equipments (3ₖ₊₁) according to a second pattern (Pᵢ₊₁) of time slots (ST) each having a communication mode of either uplink (U) or downlink (D) or mixed (S), wherein the first node (2ᵢ) is configured to use, in a time slot (ST) of the first pattern (Pᵢ) whose communication mode (U, D, S) differs from the communication mode (U, D, S) of an overlapping time slot (ST) of the second pattern (Pᵢ₊₁), only a first part (A) of the frequency range (BW) of the cellular network, and the second node (2ᵢ₊₁) is configured to use in said overlapping time slot (ST) only a second part (B) of the frequency range (BW).

## Description

The present invention relates to a first and a second node for a cellular network operating in Time Division Duplex (TDD) mode in a frequency range, the nodes serving adjacent first and second cells of the cellular network.

Cellular TDD networks are of particular importance when frequency resources are scarce. For example, in recent decisions to deploy the FRMCS (Future Railway Mobile Communication System) on the basis of the 3GPP 5G-NR (5G New Radio) standard a frequency range of just 10 MHz (channel n101: 1900 MHz - 1910 MHz) has been allocated to Railway Mobile Radio (RMR).

In cellular TDD networks, a base station ("node") communicates with user equipments ("UEs") in its cell in successive radio frames, and in each radio frame according to a specific pattern of uplink and downlink time slots, with a mixed or "special" time slot interspersed as a guard period between a downlink and an uplink time slot to account for propagation delays. To allow varying ratios of uplink to downlink capacities in the network, the 5G-NR standard provides a dynamic TDD mode in which the number of uplink and downlink time slots in a pattern can change from frame to frame. Moreover, in different cells of the network different TDD patterns can be used, e.g., to adapt an RMR network to different uplink/downlink throughput needs in cells covering rural areas, city areas or station/shunting areas.

When cells with different TDD patterns adjace each other, unwanted crosslink interference may arise. The uplink in one cell may cause interference to the downlink in the neighbouring cell ("UE to UE interference"), and the downlink in one cell may cause interference to the uplink in the neighbouring cell ("node to node interference"). Dynamic TDD, which allows for a rapid reconfiguration of time slots between uplink and downlink modes to account for short term uplink and downlink traffic requirements, makes this worse.

It is an object of the invention to provide a system for a cellular TDD network which allows the use of different TDD patterns in adjacent cells with less crosslink interference.

To this end, the invention provides for a system comprising a first and a second node for a cellular network operating in TDD mode in a frequency range, the nodes serving adjacent first and second cells of the cellular network, which is characterised in that
the first node is configured to wirelessly communicate with user equipments according to a first pattern of time slots each having a communication mode of either uplink or downlink or mixed, and
the second node is configured to wirelessly communicate with user equipments according to a second pattern of time slots each having a communication mode of either uplink or downlink or mixed,
wherein the first node is configured to use, in a time slot of the first pattern whose communication mode differs from the communication mode of an overlapping time slot of the second pattern, only a first part of the frequency range, and the second node is configured to use in said overlapping time slot only a second part of the frequency range.

The system of the invention creates a novel operating mode of fractional frequency re-use within only a part of the TDD pattern that reigns the frames of the communication channel. Limiting each node's freedom in resource block allocation to separate parts of the frequency range only for those time slots that differ in communication mode effectively reduces the risk of crosslink interference without unduly affecting the traffic capacity of the cells.

Preferably, the first and second patterns are synchronised in time, which maximises allocation freedom for each node.

In a particularly preferred embodiment of the invention, where the frequency range is subdivided into frequency bands and each combination of a frequency band and a time slot forms a resource block for said wireless communications, the first part is separated from the second part by at least one resource block. The separation by at least one resource block creates a temporary "guard band" in frequency between potentially conflicting TDD communications in the two adjacent cells. The slight decrease in allocation space for the nodes is by far outweighed by the dramatic increase in crosslink interference suppression introduced by the guard band.

The first part may, e.g., be separated from the second part by two to six resource blocks, preferably by four resource blocks. For example, in a TDD network with a frequency range of 10 MHz, a subcarrier spacing of 15 KHz and 12 subcarriers per resource block 50 resource blocks à 180 KHz frequency band width, with mutual 20 KHz spacing, cover the frequency range. Donating two to six, in particular four, resource blocks out of 50 for creating the guard band is a small price for effective crosslink interference suppression in return.

In a further preferred embodiment of the invention, in which each pattern has a given number of uplink and a given number of downlink time slots, the uplink, downlink and mixed time slots are arranged in each pattern such that the number of time slots with differing communication modes that overlap between both patterns is minimised. This keeps the time length of the guard band as short as possible, to maximise resource block allocation space for each node.

For the same reason, the uplink, downlink and mixed time slots are arranged in each pattern preferably such that the time slots with differing communication modes that overlap between both patterns are contiguous.

Still another preferred embodiment of the invention comprises a third node for the cellular network, the third node serving a third cell adjacent to the second but not to the first cell of the cellular network, wherein the third node is configured to wirelessly communicate with user equipments according to a third pattern of time slots each having a communication mode of either uplink or downlink or mixed, and wherein the third node is configured to use, in a time slot of the third pattern whose communication mode differs from the communication mode of an overlapping time slot of the second pattern, only the first part of the frequency range. Preferably, also here the second and third patterns are synchronised in time.

This embodiment can be mitigate even large TDD pattern changes, for example between a cell in a suburban area with large downlink requirements and a cell covering an industrial area or a railway shunting area with large uplink requirements for "internet of things" uploads. The large TDD pattern change is mitigated over one or more intermediate cells with intermediate TDD patterns, to minimise the overall loss of resource blocks by otherwise too large guard bands.

To maximise thoughput, also in this embodiment the numbers of uplink, downlink and mixed time slots in the second pattern may be chosen, and in each pattern the uplink, downlink and mixed time slots may be arranged, such that both the number of time slots with differing communication modes that overlap between the first and the third pattern is minimised and the number of time slots with differing communication modes that overlap between the first and the second pattern is substantially equal to the number of time slots with differing communication modes that overlap between the second and the third pattern.

The system of the invention is suited for any cellular TDD network. For an easy rollout in existing environments each node is preferably configured to cooperate with a cellular network according to a 3GPP 5G-NR standard in TDD mode.

The invention will now be explained in more detail below on the basis of exemplary embodiments thereof with reference to the accompanying drawings, in which show:
Fig. 1 the system of the invention in a schematic perspective view;
Fig. 2 a resource grid of resource blocks of the communication channel of the system of Fig. 1;
Fig. 3 an exemplary TDD pattern in a radio frame of the communication channel of Fig. 2;
Fig. 4 a crosslink interference scenario between two TDD patterns of two adjacent cells of a cellular TDD network;
Figs. 5a and 5b the respective allocation spaces of two adjacent nodes of the system of Fig. 1 with the TDD patterns of Fig. 4 in the resource grid of Fig. 2; and
Fig. 6 a usage of the resource grid by two adjacent nodes of the system of Fig. 1 for the scenario of Fig. 4.

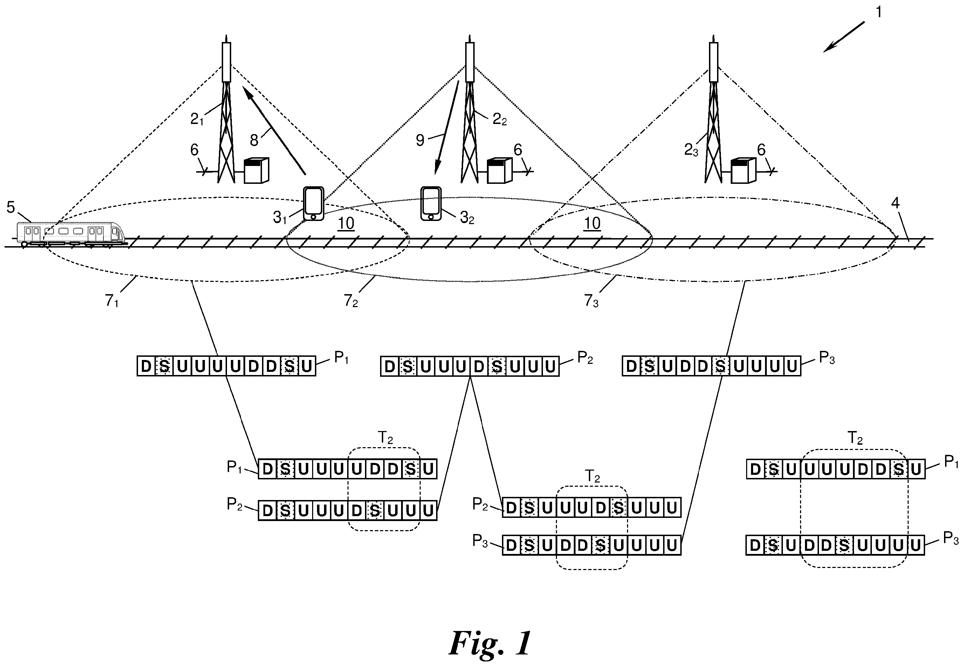

Fig. 1 shows a system 1 comprised of at least two nodes 2₁, 2₂, ..., generally 2ᵢ, (here: three exemplary nodes 2₁, 2₂, 2₃) for wireless communication with at least one user equipment (UE) 3₁, 3₂, ..., generally 3ₖ. The UEs 3ₖ are moving along a track 4, e.g., a railway track by riding on a train 5. The track 4 may have the form of any arbitrary spline in space, be it straight, curved, meandering etc.

The system 1 is part of a larger cellular network (not shown) connected via one or more interface/s 6 to the nodes 2ᵢ. Each node 2ᵢ is responsible for and wirelessly covers one of several cells 7₁, 7₂, ..., generally 7ᵢ. The cells 7ᵢ together form the coverage area of the cellular network through which the UEs 3ₖ roam from cell to cell when moving.

The cells 7ᵢ may have any form and size. Each cell 7ᵢ neighbours at least one other cell 7ⱼ (j ≠ i). In the example of Fig. 1 where the UEs 3ₖ move along the track 4 the cells 7ᵢ may be arranged in a chain-like manner following the track 4, forming a so-called linear or one-dimensional cellular network in which the track 4 passes all cells 7ᵢ one after the other. However, the cellular network could as well be a non-linear, two-dimensional cellular network wherein the cells two-dimensionally neighbour one another and form a contiguous patchwork of cells 7ᵢ. Here, the track 4 will usually pass through only a subset of the cells 7ᵢ along its way, and at least the cells 7ᵢ passed by the track 4 - and their respective nodes 2ᵢ - are designed as described herein.

The UEs 3ₖ may be of any type known in the art, e.g., mobile phones, smartphones, wireless modems, etc.

The cellular network, of which the system 1 is a part, can be of any type which can operate in a TDD mode as explained at the outset and in detail below. One embodiment of such a TDD cellular network is a cellular network according to a 3GPP 5G-NR standard operated in TDD mode. The parts of the 5G-NR standard that deal in particular with the 5G radio access and the signaling protocol between the UEs 3ₖ and the nodes 2ᵢ, and between the nodes 2ᵢ, are defined, e.g., in ETSI Technical Standards TS 38.300 (Global 5G RAN Overview), TS 38.211 (Physical Layer), TS 38.212 (MAC Layer), TS 38.213 and TS 38.214 (Procedures), TS 38.331 (RRC: UE - Radio Node Signaling Protocol) and TS 38.423 (Xn-AP: Inter Radio Node Signaling Protocol), all of which are incorporated herein by reference. The functionalities of the nodes 2ᵢ and UEs 3ₖ may thus - for a smooth cooperation with and within 5G-NR cellular networks - be as described in said standards, except for the differences described in the present disclosure.

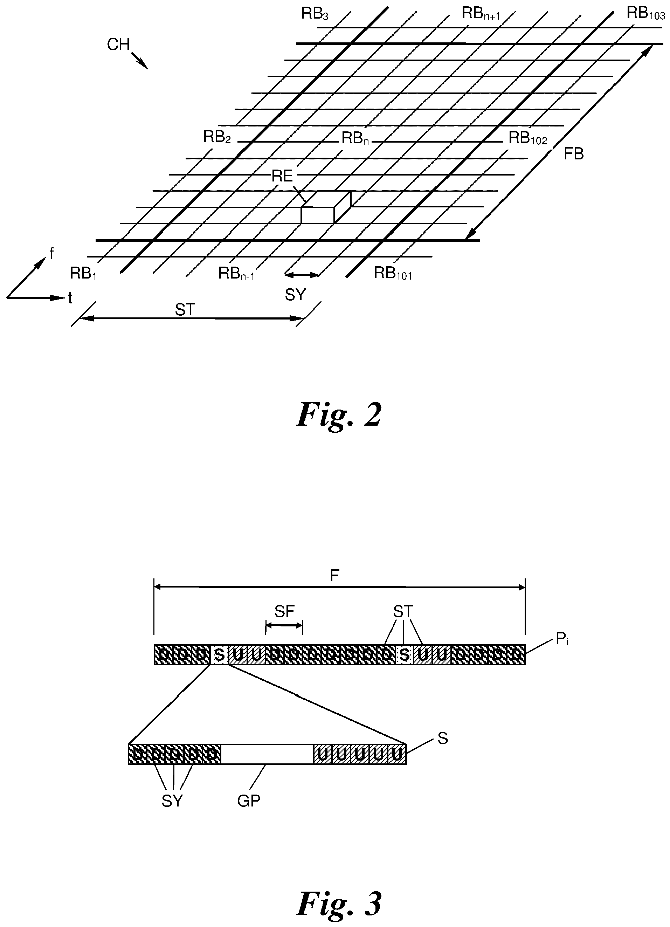

In TDD mode a wireless communication channel CH (Fig. 2) between a node 2ᵢ and a UE 3ₖ is at any point in time either used exclusively for uplink, i.e. for a wireless communication from a UE 3ₖ to a node 2ᵢ (see arrow 8), or for downlink, i.e. for a wireless communication from a node 2ᵢ to a UE 3ₖ (see arrow 9). All UEs 3ₖ within the cell 7ᵢ of a node 2ᵢ share a common wireless communication channel CH so that the entire cell 7ᵢ is, at any certain point of time, either in an uplink communication mode (8) or a downlink communication mode (9), and the time slots of uplink and downlink communication modes follow one another according to a specific TDD sequence or pattern Pᵢ, as explained later on with reference to Figs. 3 - 6.

The 3GPP 5G-NR standard also supports different radio beams of a node 2ᵢ in different sectors of a cell 7ᵢ. The crosslink interference scenario between adjacent beams with different TDD patterns is very much the same as the crosslink interference scenario between adjacent cells with different TDD patterns. Therefore, in the present disclosure the term "cell" comprises both cells as well as such individual radio beams of a node 2ᵢ.

Fig. 2 shows an exemplary resource grid of resource blocks of the communication channel CH used between the nodes 2ᵢ and the UEs 3ₖ in the wireless uplink communications 8 as well as in the wireless downlink communications 9.

The channel CH is subdivided in frequency f into frequency bands FB, each accommodating a subcarrier (not shown), and in time t into time slots ST. A combination of a frequency band FB and a time slot ST is called a resource block RBₙ and carries, e.g., 14 - 224 OFDM symbols SY on 12 subcarriers in 12 frequency bands FB. One subcarrier or frequency band FB of one OFDM symbol SY represents a resource element RE of a resource block RBₙ.

The entire (uplink or downlink) communication channel CH spans in frequency f over a multitude of resource blocks RBₙ and in time over a multitude of time slots ST. An exemplary frequency range BW of a 5G-NR cellular network for RMR is 10 MHz, accommodating 50 resource blocks RBₙ with each a frequency band FB of 200 KHz (actually: 180 KHz with a spacing of 20 KHz) .

The segmentation of the communication channel CH in time t is shown in Fig. 3 in detail. In time t the channel CH is comprised of successive radio frames F, e.g., of 10 ms each. In 5G-NR each frame F is subdivided into 10 subframes SF, and each subframe SF is comprised of an arbitrary number (actually: a number linked to the subcarrier spacing used) of time slots ST, e.g., 1, 2, 4, 8 or 16 time slots ST. Each time slot ST is subdivided into an arbitrary number of OFDM symbols SY, e.g., 14 symbols SY.

In TDD mode, each slot ST of the channel CH can be either used for uplink, i.e. be in the communication mode "uplink" (designated "U"), or used for downlink, i.e. be in the communication mode "downlink" (designated "D"). Each frame F in a cell 7ᵢ therefore follows a specific pattern Pᵢ of uplink and downlink time slots ST, e.g., here: the pattern Pᵢ = "DDDSUUDDDDDDDSUUDDDD".

Time slots ST designated with "S" in the pattern Pᵢ are "special" or "mixed" time slots which a contain a silent or "guard" period GP to account for propagation delays between a node 2ᵢ and a UE 3ₖ on the channel CH. In particular, such a mixed time slot "S" is used between a downlink time slot "D" and an uplink time slot "U". As shown in Fig. 3, a mixed time slot "S" may contain downlink symbols SY at the beginning, followed by a short guard period GP and ending with some uplink symbols SY.

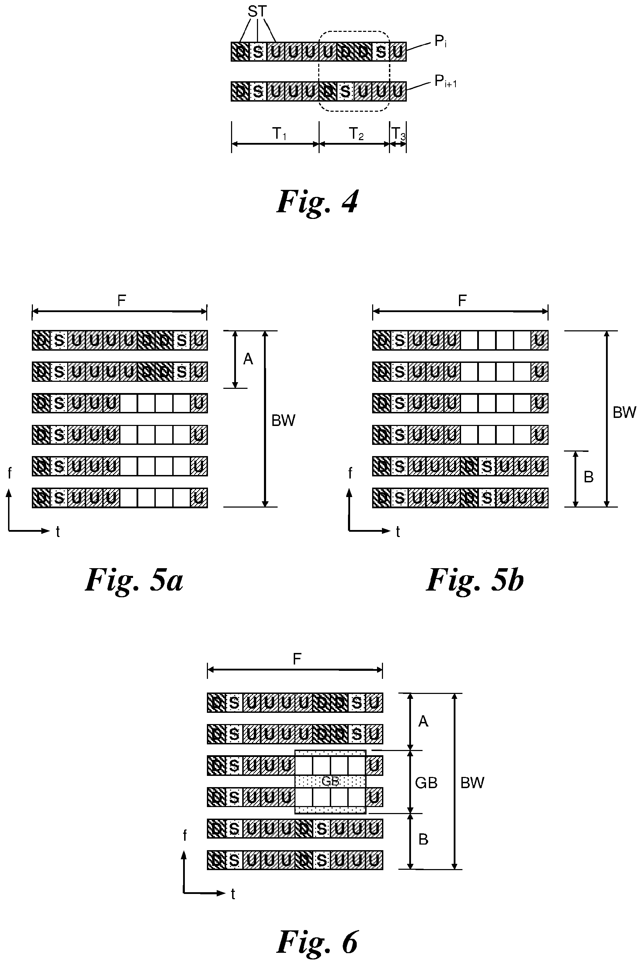

Fig. 4 shows a possible interference scenario that may happen when two adjacent cells (such as the cells 2₁ and 2₂ or the cells 2₂ and 2₃ in Fig. 1) have communication channels CH with different patterns Pᵢ, Pᵢ₊₁. In the adjacing or overlapping border areas 10 of the two cells 2ᵢ, 2ᵢ₊₁ some of the slots ST of the first pattern Pᵢ and some of the slots ST of the second pattern Pᵢ₊₁ are concurrently in the same communication mode D, S or U, see sections T₁ and T₃ of the patterns Pᵢ and Pᵢ₊₁, whereas at other times some of the slots ST of the two patterns Pᵢ and Pᵢ₊₁ are in different communication modes, see section T₂ of the patterns Pᵢ and Pᵢ₊₁. As can be readily seen, in the section T₂ of conflict an uplink communication 8 of a UE 3ₖ to its node 2ᵢ could severely interfere with a downlink communication 9 received at a neighbouring UEₖ₊₁ from the node 2ᵢ₊₁, or a downlink communication 9 of a node 2ᵢ₊₁ to a UE 3ₖ₊₁ could severely interfere with an uplink communication 8 of a neighbouring UE 3ₖ to the node 2ᵢ.

To resolve this crosslink interference situation, two adjacent nodes 2ᵢ, 2ᵢ₊₁ which have differing TDD patterns Pᵢ, Pᵢ₊₁ are configured as follows.

In the sections T₁, T₃ of the patterns Pᵢ, Pᵢ₊₁ where the nodes 2ᵢ, 2ᵢ₊₁ are in the same communication mode (U, D, or S) each node 2ᵢ, 2ᵢ₊₁ uses the full frequency range BW to allocate resource blocks RBₙ to its connected UEs 3ₖ, 3ₖ₊₁ as needed. In the sections T₂ of the patterns Pᵢ, Pᵢ₊₁ where the communication modes of the nodes 2ᵢ, 2ᵢ₊₁ differ, the first node 2ᵢ uses only a part A and the second mode 2ᵢ₊₁ uses only a part B (different from part A) of the frequency range BW for allocating resource blocks RBₙ to its respectively connected UEs 3ₖ, 3ₖ₊₁ as required. The unused space of the ressource grid of the channel CH is shown in white in Fig. 5a for the first node 2ᵢ and in Fig. 5b for the second node 2ᵢ₊₁.

Fig. 6 is the combination of Figs. 5a and 5b, showing the combined usage of the resource grid of the channel CH by the nodes 2ᵢ, 2ᵢ₊₁ in the area of overlap 10 of the cells 7ᵢ, 7ᵢ₊₁.

As shown in Fig. 6, the parts A and B of the frequency range BW may be separated from one another by a "guard band" GB which is - in frequency f ("height" in Fig. 6) - at least one resource block RBₙ wide. In 5G-NR scenarios with, e.g., 50 resource blocks RBₙ over the entire frequency range BW a guard band GB of two to six resource blocks RBₙ in height, e.g., four resource blocks RBₙ in height, may be a good compromise between interference suppression and throughput.

To minimise the lateral extension of the guard band GB, i.e. its extension in time t ("width" in Fig. 6), firstly, the two adjacent nodes 2ᵢ, 2ᵢ₊₁ are sychronised in time so that the beginnings of their respective frames F, and hence the time slots ST, coincide.

Secondly, the uplink ("U"), downlink ("D") and mixed ("S") time slots ST are arranged in each pattern Pᵢ, Pᵢ₊₁ such that the number of time slots ST with differing communication modes that overlap in time between both patterns Pᵢ, Pᵢ₊₁ are minimised (in the example of Figs. 4 - 6: to four such differing time slots ST). Minimising the number of time slots ST differing in communication mode (U, D, S) between the two patterns Pᵢ, Pᵢ₊₁ is equivalent to minimising the so-called "Levenshtein" distance between the two patterns Pᵢ, Pᵢ₊₁ by rearranging the slots ST within each pattern Pᵢ, Pᵢ₊₁.

Thirdly, in order to minimise the required number of mixed ("S") time slots ST, the number of time slots ST with differing communication modes that overlap between both patterns Pᵢ, Pᵢ₊₁ are optionally made contiguous, see the continuous guard band GB shown in Fig. 6.

For an intended uplink-to-downlink ratio in a cell 7ᵢ the number of uplink time slots "U" as well as the number of downlink time slots "D" in the pattern Pᵢ of that cell 7ᵢ are usually given. The number of mixed time slots "S" necessary for guarding between downlink and uplink time slots "D", "U" follows from the former numbers. Still, by rearranging the order of the of uplink, downlink and mixed time slots "U", "D", "S" the number of time slots ST with differing communication modes that overlap in time between the two patterns Pᵢ, Pᵢ₊₁ of the adjacent nodes 2ᵢ, 2ᵢ₊₁, i.e. their Levenshtein distance, can be minimised.

When the differences between a first pattern P₁ in a first cell 7₁, e.g., a suburban area with primarily downlink and hence a lot of downlink time slots "D", and a target ("third") pattern P₃ in a target ("third") cell 7₃, e.g., an industrial or railway shunting area with a lot of uplink traffic and hence a lot of uplink time slots "U", is so large that the section T₂ would be quite long and the guard band GB quite broad, an intermediate node 2₂ for an intermediate cell 7₂ could be established therebetween and configured to mitigate the change from the pattern P₁ to the pattern P₃ via an intermediate pattern P₂. This is shown in the lower half of Fig. 1.

In particular, the number of uplink time slots "U", the number of downlink time slots "D" and the number of mixed time slots "S" in the intermediate (second) pattern P₂ are chosen, and in each pattern P₁, P₂, P₃ the uplink, downlink and mixed time slots "U", "S", "D" are (re-) arranged, such that both of the following two criteria are met:
1) the number of time slots ST with differing communication modes (U, D, S) that overlap between the first pattern P₁ and the third pattern P₃ is minimised, i.e. their Levenshtein distance is minimised; and
2) the number of time slots ST with differing communication modes (U, D, S) that overlap between the first pattern P₁ and the second pattern P₂ is substantially equal to the number of time slots ST with differing communication modes (U, D, S) that overlap between the second pattern P₂ and the third pattern P₃.

Of course, if there is an odd number of differing time slots ST between the first (source) and third (target) patterns P₁, P₃ or the minimisation of the Levenshtein distance does not converge well, the term "substantially equal" may mean equality ± 1 or a broader tolerance window of equality.

For example, if six time slots ST differ in their communication mode between the first and the third pattern P₁, P₃, then the intermediate pattern P₂ is chosen, and all the time slots in all patterns P₁, P₂, P₃ are arranged, such that the number of time slots ST differing in communication mode between the first and the second pattern P₁, P₂ is less than six (here: four) and the number of time slots ST differing in communication mode between the second and the third pattern P₂, P₃ is also less than six (here: four).

The concept shown in Fig. 1 for three nodes 2₁ - 2s and patterns P₁ - P₃ can, of course, be extended to more than one intermediate node 2₂ and more than one intermediate pattern P₂ between a source pattern P₁ and a target pattern P₃, to smooth the transition between them.

The invention is not restricted to the specific embodiments described in detail herein but encompasses all variants, combinations and modifications thereof that fall within the framework of the appended claims.

## Claims

1. A system comprising a first and a second node (2i, 2ᵢ₊₁) for a cellular network operating in Time Division Duplex, TDD, mode in a frequency range (BW), the nodes (2ᵢ, 2ᵢ₊₁) serving adjacent first and second cells (7ᵢ, 7ᵢ₊₁) of the cellular network, **characterised in that**
the first node (2i) is configured to wirelessly communicate (8, 9) with user equipments (3ₖ) according to a first pattern (Pᵢ) of time slots (ST) each having a communication mode of either uplink (U) or downlink (D) or mixed (S), and
the second node (2ᵢ₊₁) is configured to wirelessly communicate (8, 9) with user equipments (3ₖ₊₁) according to a second pattern (Pᵢ₊₁) of time slots (ST) each having a communication mode of either uplink (U) or downlink (D) or mixed (S),
wherein the first node (2ᵢ) is configured to use, in a time slot (ST) of the first pattern (Pᵢ) whose communication mode (U, D, S) differs from the communication mode (U, D, S) of an overlapping time slot (ST) of the second pattern (Pᵢ₊₁), only a first part (A) of the frequency range (BW), and the second node (2ᵢ₊₁) is configured to use in said overlapping time slot (ST) only a second part (B) of the frequency range (BW).

2. The system according to claim 1, **characterised in that** the first and second patterns (Pᵢ, Pᵢ₊₁) are synchronised in time.

3. The system according to claim 1 or 2, **characterised in that** the frequency range (BW) is subdivided into frequency bands (SF) and each combination of a frequency band (SF) and a time slot (ST) forms a resource block (RBₙ) for said wireless communications (8, 9), wherein the first part (A) is separated from the second part (B) by at least one resource block (RBₙ).

4. The system according to claim 3, **characterised in that** the first part (A) is separated from the second part (B) by two to six resource blocks (RBₙ), preferably by four resource blocks (RBₙ).

5. The system according to any one of claims 1 to 4, **characterised in that** each pattern (Pᵢ, Pᵢ₊₁) has a given number of uplink (U) and a given number of downlink (D) time slots (ST), wherein the uplink, downlink and mixed time slots (ST) are arranged in each pattern (Pᵢ, Pᵢ₊₁) such that the number of time slots (ST) with differing communication modes (U, D, S) that overlap between both patterns (Pᵢ, Pᵢ₊₁) is minimised.

6. The system according to claim 5, **characterised in that** the uplink, downlink and mixed time slots (ST) are arranged in each pattern (Pᵢ, Pᵢ₊₁) such that the time slots (ST) with differing communication modes (U, D, S) that overlap between both patterns (Pᵢ, Pᵢ₊₁) are contiguous.

7. The system according to any one of claims 1 to 6, **characterised by** a third node (2₃) for the cellular network, the third node (2₃) serving a third cell adjacent (7s) to the second (7₂) but not to the first cell (7₁) of the cellular network,
wherein the third node (2₃) is configured to wirelessly communicate with user equipments (3ₖ) according to a third pattern (P₃) of time slots (ST) each having a communication mode of either uplink (U) or downlink (D) or mixed (S), and
wherein the third node (2₃) is configured to use, in a time slot (ST) of the third pattern (P₃) whose communication mode (U, D, S) differs from the communication mode of an overlapping time slot (ST) of the second pattern (P₂), only the first part (A) of the frequency range (BW).

8. The system according to claim 7, **characterised in that** the second and third patterns (P₂, P₃) are synchronised in time.

9. The system according to claim 7 or 8, **characterised in that** each of the first and third patterns (P₁, P₃) has a given number of uplink and a given number of downlink time slots (ST),
wherein the numbers of uplink, downlink and mixed time slots (ST) in the second pattern (P₂) are chosen, and in each pattern (P₁, P₂, P₃) the uplink, downlink and mixed time slots (ST) are arranged, such that both
the number of time slots (ST) with differing communication modes (U, D, S) that overlap between the first and the third pattern (P₁, P₃) is minimised and
the number of time slots (ST) with differing communication modes (U, D, S) that overlap between the first and the second pattern (P₁, P₂) is substantially equal to the number of time slots (ST) with differing communication modes (U, D, S) that overlap between the second and the third pattern (P₂, P₃).

10. The system according to any one of claims 1 to 9, **characterised in that** each node (2ᵢ, 2ᵢ₊₁, 2₃) is configured to cooperate with a cellular network according to a 3GPP 5G-NR standard in TDD mode.
